# EUROPÄISCHE PATENTANMELDUNG

(11) **EP 3 026 236 A1**
(43) Veröffentlichungstag der Anmeldung: **01.06.2016**
(21) Anmeldenummer: 15193731.5
(22) Anmeldetag: 09.11.2015
(51) Int. Cl.: F02B 29/04, F02M 35/02, F02M 35/10, B01D 53/26, F02M 35/104

(54) **FRISCHLUFTANLAGE**

(30) Priorität: 20.11.2014 DE 102014223683
(71) Anmelder: Mahle International GmbH, 70376 Stuttgart (DE)
(72) Erfinder: Büsse, Nicola, 70180 Stuttgart (DE); Drespling, Hans-Peter, 89522 Heidenheim (DE); Engelhardt, Kai, 70376 Stuttgart (DE); Mayer, Burkhardt, 71334 Waiblingen (DE); Stehlig, Jürgen, 72654 Neckartenzlingen (DE)
(74) Vertreter: BRP Renaud & Partner mbB Rechtsanwälte Patentanwälte Steuerberater

(57) **Zusammenfassung**

Die vorliegende Erfindung betrifft eine Frischluftanlage (4) einer Brennkraftmaschine (1) zum Zuführen von Frischluft zu Brennräumen (3) der Brennkraftmaschine (1), umfassend einen Frischluftstrang (14) zum Führen von Frischluft, wenigstens einen Frischlufteinlass (15), durch den Frischluft in den Frischluftstrang (14) eintreten kann, und wenigstens einen Frischluftauslass (16), durch den Frischluft aus dem Frischluftstrang (14) austreten kann.

Die Gefahr eines Kondensateintritts in die Brennräume (3) kann reduziert werden durch wenigstens einen Kondensatadsorber (19) zum Adsorbieren von kondensiertem Wasser, der im Frischluftstrang (14) zwischen dem Frischlufteinlass (15) und dem Frischluftauslass (16) angeordnet und der darin geführten Frischluft ausgesetzt ist.

## Beschreibung

Die vorliegende Erfindung betrifft eine Frischluftanlage einer Brennkraftmaschine zum Zuführen von Frischluft zu Brennräumen der Brennkraftmaschine, mit den Merkmalen des Oberbegriffs des Anspruchs 1. Die Erfindung betrifft außerdem eine mit einer derartigen Frischluftanlage ausgestattete Brennkraftmaschine.

Bei modernen Brennkraftmaschinen kann eine Abgasrückführung durchgeführt werden, um die Schadstoffemissionen der Brennkraftmaschine zu reduzieren. Im Abgas der Brennkraftmaschine kann jedoch Wasserdampf enthalten sein, der beim Abkühlen des Abgases kondensieren kann. Sofern eine Abgasrückführung an eine Frischluftanlage angeschlossen ist, wird das rückgeführte Abgas der den Brennräumen zugeführten Frischluft zugemischt. Hierbei kann es zu einer Abkühlung des rückgeführten Abgases kommen. Hierbei besteht die Gefahr einer Kondensation des Wasserdampfs. Bei aufgeladenen Brennkraftmaschinen erfolgt regelmäßig eine Abkühlung der Ladeluft, also der verdichteten Frischluft, um den Massenstrom zu den Brennräumen zu vergrößern und um die Schadstoffemissionen zu reduzieren. Ist nun die Abgasrückführung stromauf eines solchen Ladeluftkühlers an die Frischluftanlage angeschlossen, erhöht sich die Gefahr einer Kondensatbildung. Da sich flüssiges Wasser negativ auf die Verbrennungsprozesse in den Brennräumen der Brennkraftmaschine auswirkt, besteht ein Bedürfnis, Kondensat in der Frischluftanlage zu vermeiden bzw. abzuführen.

Aus der DE 10 2013 202 668 A1 ist eine gattungsgemäße Frischluftanlage bekannt, die einen Frischluftstrang zum Führen von Frischluft aufweist. Durch einen Frischlufteinlass kann Frischluft in den Frischluftstrang eintreten. Durch mehrere Frischluftauslässe kann Frischluft aus dem Frischluftstrang austreten. Bei der bekannten Frischluftanlage ist am Frischluftstrang eine Kondensatfalle angeordnet, mit der sich im Frischluftstrang bildendes Kondensat gesammelt und abgeführt werden kann. Zweckmäßig ist ein Sammelraum der Kondensatfalle mit einem vom Abgas durchströmten Innenraum des Frischluftstrangs fluidisch verbunden und dabei im Bereich eines Bogens des Frischluftstrangs an einer radial außen liegenden Seite angeordnet, so dass das an einer Innenwand des Abgasstrangs anfallende und daran entlang strömende Kondensat durch eine Wandöffnung in den Sammelraum der Kondensatfalle gedrängt wird. Der Aufwand zur Realisierung einer derartigen Kondensatfalle ist relativ groß.

Aus der EP 2 135 996 A1 ist es bekannt, in einer Frischluftanlage einen Kohlenwasserstoffadsorber anzuordnen, um dampfförmige Kohlenwasserstoffe, die bei stehendem Fahrzeug aus den Brennräumen ausdampfen und sich entlang der Frischluftanlage ausbreiten können, zu adsorbieren bevor sie in eine Umgebung des Fahrzeugs austreten können. Bei eingeschalteter Brennkraftmaschine führt die in Richtung der Brennräume orientierte Frischluftströmung zu einer Desorption der im Kohlenwasserstoffadsorber adsorbierten Kohlenwasserstoffe.

Die vorliegende Erfindung beschäftigt sich mit dem Problem, für eine Frischluftanlage der vorstehend genannten Art bzw. für eine damit ausgestattete Brennkraftmaschine eine verbesserte Ausführungsform anzugeben, die sich insbesondere durch eine effiziente Kondensatvermeidung in den Brennräumen der Brennkraftmaschine bei preiswerter Realisierbarkeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Frischluftstrang zumindest einen zum Adsorbieren von Wasser vorgesehenen Kondensatadsorber anzuordnen, und zwar derart, dass er der im Frischluftstrang geführten Frischluft ausgesetzt ist. Im Betrieb der Brennkraftmaschine kann im Frischluftstrang anfallendes Kondensat, bei dem es sich um kondensiertes Wasser handelt, vom Kondensatadsorber adsorbiert werden. Bei bestimmten Betriebsbedingungen bzw. Betriebszuständen der Brennkraftmaschine kann der Kondensatadsorber wieder desorbiert werden. Die Unterbringung eines derartigen Kondensatadsorbers im Frischluftstrang lässt sich vergleichsweise einfach und preiswert realisieren. Insbesondere muss keine Wandöffnung in dem Frischluftstrang vorgesehen werden, um das Innere des Frischluftstrangs fluidisch mit einem Sammelraum einer konventionellen Kondensatfalle zu verbinden. Dementsprechend entfällt auch ein diesbezüglicher Aufwand zur Abdichtung des Frischluftstrangs. Ebenso muss keine abgedichtete Abführung von angesammeltem Kondensat vorgesehen werden. Ferner unterscheidet sich der hier vorgeschlagene Kondensatadsorber, der zur Adsorption von flüssigem Wasser ausgestaltet ist, signifikant von einem konventionellen, beispielsweise aus der vorstehend genannten EP 2 135 996 A1 bekannten Kohlenwasserstoffadsorber, der zur Adsorption gasförmiger Kohlenwasserstoffe ausgestaltet ist und für die Adsorption von flüssigem Wasser ungeeignet ist.

Gemäß einer vorteilhaften Ausführungsform kann eine im Frischluftstrang angeordnete Ladeeinrichtung zum Verdichten bzw. zum Aufladen der Frischluft vorgesehen sein. Ferner kann im Frischluftstrang stromab der Ladeeinrichtung und stromauf des Kondensatadsorbers ein Ladeluftkühler zum Kühlen der verdichteten Frischluft angeordnet sein. Mit anderen Worten, die Frischluftanlage ist für eine aufgeladene Brennkraftmaschine vorgesehen und enthält einen Ladeluftkühler. Durch die Abkühlung der Ladeluft, also der verdichteten Frischluft besteht grundsätzlich eine erhöhte Gefahr einer Kondensatbildung. Die Anordnung des Kondensatadsorbers stromab des Ladeluftkühlers reduziert somit die Gefahr, dass Kondensat über den jeweiligen Frischluftauslass in die Brennkraftmaschine bzw. in deren Brennräume gelangt.

Gemäß einer anderen Ausführungsform kann am Frischluftstrang eine Einleitstelle zum Einleiten von rückgeführtem Abgas in die Frischluft angeordnet sein. Das bedeutet, dass die Brennkraftmaschine mit einer externen Abgasrückführung ausgestattet ist, bei der Abgas von einer Abgasanlage abgezweigt und der Frischluftanlage zugeführt wird. Dabei erfolgt die Abgasrückführung außerhalb eines Motorblocks der Brennkraftmaschine, also extern. Sofern ein Ladeluftkühler vorgesehen ist, kann die Einleitstelle für rückgeführtes Abgas vorteilhaft stromauf des Ladeluftkühlers angeordnet sein. Sofern eine Ladeeinrichtung vorgesehen ist, kann die Einleitstelle dabei stromauf oder stromab der Ladeeinrichtung angeordnet sein. Bevorzugt erfolgt die Abgasrückführung hochdruckseitig, so dass sich die Einleitstelle stromab der Ladeeinrichtung befindet. Da das rückgeführte Abgas im Vergleich zur Frischluft einen höheren Wassergehalt aufweist, ist die Gefahr einer Kondensatbildung bei einer Abgasrückführung erhöht. Durch die Positionierung des Kondensatadsorbers stromab des Ladeluftkühlers kann auch Kondensat, das aus dem rückgeführten Abgas stammt, adsorbiert werden. Die Positionierung der Einleitstelle stromauf des Ladeluftkühlers ist dabei von erhöhter Bedeutung. Denn durch diese Maßnahme kann das rückgeführte Abgas gemeinsam mit der aufgeladenen Frischluft gekühlt werden. Insbesondere kann dadurch auf einen separaten Abgasrückführkühler verzichtet werden. Falls dennoch ein Abgasrückführkühler vorgesehen ist, lässt sich die Temperatur des rückgeführten Abgases mit Hilfe des Ladeluftkühlers nochmals reduzieren.

Bei einer anderen vorteilhaften Ausführungsform kann im Frischluftstrang ein Saugmodul angeordnet sein, von dem mehrere Saugrohre abgehen, die jeweils zu einem Frischluftauslass führen. Das Saugmodul weist einen Einlass auf und enthält üblicherweise eine Verteilerkammer, in der die dem Saugmodul zugeführte Frischluft auf die Saugrohre verteilt wird.

Gemäß einer besonders vorteilhaften Ausführungsform kann nun der Kondensatadsorber im Saugmodul angeordnet sein. Das Saugmodul ist im Vergleich zu anderen Komponenten der Frischluftanlage ein vergleichsweise großvolumiges Bauteil. Insbesondere besitzt es eine vergleichsweise große, der Frischluft ausgesetzte Oberfläche. Hierdurch lässt sich auch ein entsprechend großer Kondensatzadsorber im Saugmodul unterbringen. Dies führt zu einer besonders hohen Effizienz für die Kondensatadsorption.

Gemäß einer vorteilhaften Weiterbildung kann der zuvor genannte Ladeluftkühler im Saugmodul angeordnet sein. Hierdurch wird die Funktionsdichte im Saugmodul erhöht, was eine verbesserte Bauraumausnutzung bzw. eine kompakte Bauform für die Frischluftanlage begünstigt.

Bei einer anderen Ausführungsform kann der Kondensatadsorber als separates Bauteil konzipiert sein, das an einer der Frischluft ausgesetzten Wand des Frischluftstrangs angeordnet ist. Diese Ausführungsform lässt sich besonders preiswert realisieren, da insbesondere im Frischluftstrang keine oder nur geringfügige Anpassungen vorgenommen werden müssen, um den Kondensatadsorber darin anzuordnen.

Bei einer Weiterbildung kann der Kondensatadsorber eine Matte aufweisen, in die ein Kondensat adsorbierendes Adsorbermaterial eingebettet ist. Eine derartige adsorbierend wirkende Matte lässt sich besonders preiswert in großer Stückzahl realisieren. Beispielsweise kann ein Mattenmaterial quasi endlos hergestellt und je nach gewünschter Mattengröße zugeschnitten werden.

Bei einer anderen Weiterbildung kann die Wand eine Aussparung zum Einsetzen des genannten Bauteils, insbesondere der vorstehend genannten Matte, aufweisen. Hierdurch lässt sich das adsorbierend wirkende Bauteil in der Wand mehr oder weniger versenkt anordnen. Ferner ist das Bauteil in der Aussparung formschlüssig gehalten. Besonders vorteilhaft ist die Aussparung so ausgeführt, dass das jeweilige Bauteil darin bündig zu daran anschließenden Abschnitten der Wand angeordnet ist. Hierdurch lässt sich eine den Strömungswiderstand erhöhende Störkontur innerhalb des Frischluftstrangs vermeiden, die ein in das Innere des Frischluftstrangs vorstehendes Bauteil bilden würde.

Gemäß einer alternativen Ausführungsform kann der Kondensatadsorber in eine der Frischluft ausgesetzte Wand des Frischluftstrangs integriert sein, indem ein Kondensat adsorbierendes Adsorbermaterial in einen Werkstoff der Wand eingebettet ist. Zweckmäßig wird der Frischluftstrang bzw. die jeweilige Wand aus einem Kunststoff hergestellt. Zur Integration des Kondensatadsorbers in die Wand kann das Adsorbermaterial in diesen Kunststoff eingebettet sein.

Bei einer weiteren alternativen Ausführungsform kann der Kondensatadsorber durch ein Granulat eines Kondensat adsorbierenden Adsorbermaterials gebildet sein, das in einem Granulatbett, vorzugsweise in Form einer losen Schüttung, angeordnet ist, das hierzu in einer der Frischluft ausgesetzten Wand des Frischluftstrangs ausgespart ist. Das Granulatbett kann dabei auf geeignete Weise für Flüssigkeit (z.B. Kondensat bzw. Wasser) und Gas (z.B. Luft und Wasserdampf) durchlässig abgedeckt sein, beispielsweise mittels eines Vlieses oder mittels eines Gitters. Die Abdeckung verhindert ein Eindringen des Granulats in das Innere des Frischluftstrangs.

Bei einer anderen Ausführungsform kann der Kondensatadsorber als Adsorbermaterial eine poröse Struktur und/oder eine Kapillarstruktur aufweisen. Eine poröse Struktur zeichnet sich durch eine extrem hohe Oberfläche auf, was zu einer besonders effizienten Adsorptionswirkung führt. Eine Kapillarstruktur hat den Vorteil, dass adsorbierte Flüssigkeit quasi "verliersicher" im Kondensatadsorber festgehalten werden kann. Insbesondere lässt sich dadurch ein Austreten des flüssigen Kondensats aus dem Kondensatadsorber vermeiden.

Ein zur Verwendung im hier vorgestellten Kondensatadsorber geeignetes Adsorbermaterial kann sich insbesondere durch eine hohe Adsorptionsfähigkeit für flüssiges Wasser und eine im Vergleich dazu geringe oder quasi fehlende Adsorptionsfähigkeit für Gase oder Dämpfe auszeichnen.

Bei einer anderen vorteilhaften Ausführungsform kann der Kondensatadsorber als Adsorbermaterial Magnesiumkarbonat aufweisen.

Ein geeignetes Adsorbermaterial ist beispielsweise in der WO 2014/087355 A1 beschrieben, die hiermit durch Bezugnahme vollinhaltlich zum Inhalt der vorliegenden Anmeldung hinzugefügt wird.

Eine erfindungsgemäße Brennkraftmaschine, die insbesondere in einem Kraftfahrzeug angeordnet sein kann, umfasst eine Frischluftanlage der vorstehend beschriebenen Art. Zweckmäßig ist die Brennkraftmaschine außerdem mit einer Abgasanlage zum Abführen von Abgas von den Brennräumen der Brennkraftmaschine ausgestattet. Besonders vorteilhaft ist die Brennkraftmaschine ferner mit einer Abgasrückführanlage zum Rückführen von Abgas von der Abgasanlage zur Frischluftanlage ausgestattet. Desweiteren kann es sich bei der Brennkraftmaschine optional um eine aufgeladene Brennkraftmaschine handeln, die in der Frischluftanlage eine Ladeeinrichtung zum Verdichten der Frischluft aufweist. Beispielsweise kann die Brennkraftmaschine mit einem Abgasturbolader ausgestattet sein, dessen Verdichter in der Frischluftanlage und dessen Turbine in der Abgasanlage angeordnet ist. Außerdem kann gemäß einer vorteilhaften Ausführungsform die Abgasrückführanlage mit einem Abgasrückführkühler ausgestattet sein, mit dessen Hilfe im Betrieb der Brennkraftmaschine rückgeführtes Abgas gekühlt werden kann.

Bei einer aufgeladenen Brennkraftmaschine wird eine Abgasrückführung vor allem bei Teillast durchgeführt. Bei Teillast erfolgt gleichzeitig nur eine vergleichsweise geringe Aufladung der Frischluft, so dass durch die Kühlung der komprimierten Frischluft vergleichsweise niedrige Temperaturen realisierbar sind. Dies führt bei Teillast zu einer erhöhten Gefahr für eine Kondensatbildung. Bei Teillast anfallendes Kondensat kann vom Kondensatadsorber adsorbiert werden. Bei Volllast der Brennkraftmaschine erfolgt dagegen im Wesentlichen keine Abgasrückführung. Gleichzeitig erfolgt bei Volllast eine vergleichsweise hohe Aufladung der Frischluft, was mit einer vergleichsweise starken Temperaturerhöhung in der Frischluft einhergeht. Dementsprechend kann bei Volllast die aufgeladene Frischluft höhere Temperaturen erreichen als bei Teillast. Diese Randbedingungen führen bei Volllast dazu, dass das im Kondensatadsorber adsorbierte Kondensat desorbiert wird, wobei das adsorbierte Kondensat verdampft. Auf diese Weise wird der Kondensatadsorber bei Volllast regeneriert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit einer Frischluftanlage,
- Fig. 2 bis 4: jeweils eine Schnittansicht der Abgasanlage im Bereich eines Saugmoduls, bei verschiedenen Ausführungsformen,
- Fig. 5: eine andere Schnittansicht des Saugmoduls bei einer weiteren Ausführungsform.

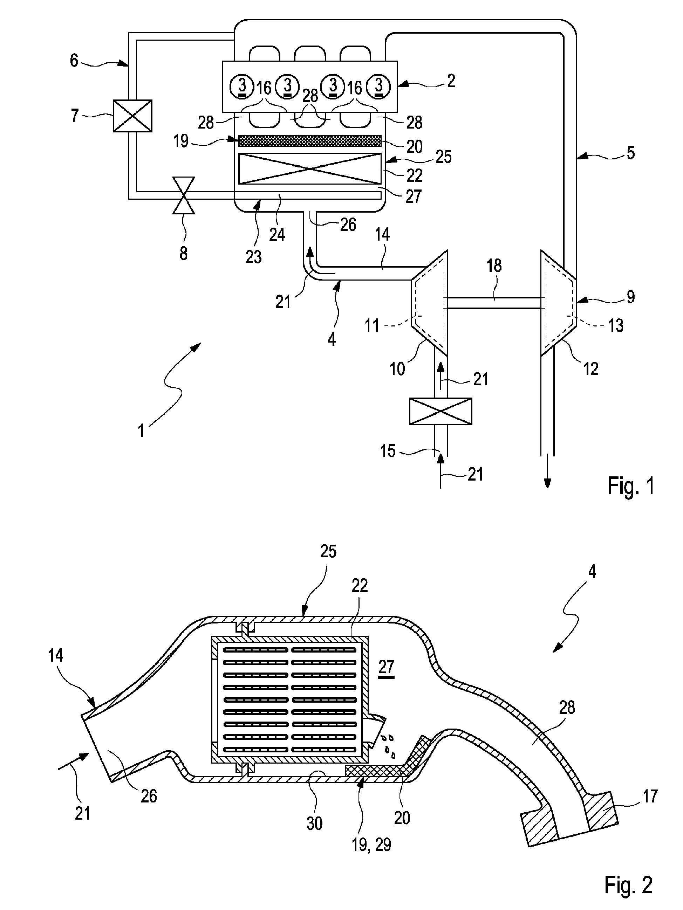

Entsprechend Figur 1 umfasst eine Brennkraftmaschine 1, die beispielsweise zum Anreiben eines Kraftfahrzeugs vorgesehen ist, einen Motorblock 2, in dem mehrere Brennräume 3 angeordnet sind. Die Brennkraftmaschine 1 weist eine Frischluftanlage 4 zum Zuführen von Frischluft zu den Brennräumen 3, eine Abgasanlage 5 zum Abführen von Abgas von den Brennräumen 3 sowie eine Abgasrückführanlage 6 zum Rückführen von Abgas von der Abgasanlage 5 zur Frischluftanlage 4 auf. Die Abgasrückführanlage 6 enthält im Beispiel der Figur 1 einen Abgasrückführkühler 7 zum Kühlen des rückgeführten Abgases und ein Abgasrückführventil 8 zum Steuern bzw. Einstellen einer Abgasrückführrate. Die Brennkraftmaschine 1 ist außerdem mit einem Abgasturbolader 9 ausgestattet, der einen Verdichter 10 mit Verdichterrad 11 und eine Turbine 12 mit Turbinenrad 13 aufweist, wobei das Verdichterrad 11 und das Turbinenrad 13 antriebsverbunden sind, beispielsweise über eine Antriebswelle 18. Der Verdichter 10 ist in der Frischluftanlage 4 angeordnet. Die Turbine 12 ist in der Abgasanlage 5 angeordnet.

Die Frischluftanlage 4 besitzt einen Frischluftstrang 14 zum Führen von Frischluft. Die Frischluftanlage 4 weist am Frischluftstrang 14 einen Frischlufteinlass 15 auf, durch den Frischluft in den Frischluftstrang 14 eintreten kann. Ferner weist die Frischluftanlage 4 am Frischluftstrang 14 mehrere Frischluftauslässe 16 auf, durch die Frischluft aus dem Frischluftstrang 14 austreten kann. Zweckmäßig ist der jeweilige Frischluftauslass 16 an den Motorblock 2 angeschlossen und jeweils einem Brennraum 3 zugeordnet. Die Frischluftauslässe 16 können gemäß den Figuren 2 bis 5 an einem gemeinsamen Flansch 17 ausgebildet sein, über den die Frischluftanlage 4 bzw. der Frischluftstrang 14 mit dem Motorblock 2 fest verbunden ist.

Entsprechend den Figuren 1 bis 5 weist die Frischluftanlage 4 außerdem zumindest einen Kondensatadsorber 19 auf. Dieser umfasst ein Adsorbermaterial 20, das jedenfalls für flüssiges Wasser also für Kondensat adsorbierend wirkt. Der Kondensatadsorber 19 ist im Frischluftstrang 14 bezüglich eines in den Figuren durch Pfeile angedeuteten Frischluftstroms 21 zwischen dem Frischlufteinlass 15 und den Frischluftauslässen 16 angeordnet. Ferner ist der Kondensatadsorber 19 im Frischluftstrang 14 so angeordnet, dass er der darin geführten Frischluft ausgesetzt ist, damit also in Kontakt steht.

Im Frischluftstrang 14 ist bei den hier gezeigten Ausführungsformen außerdem ein Ladeluftkühler 22 angeordnet, und zwar bezüglich der Frischluftströmung 21 stromab des Lufteinlasses 15 und stromauf des Kondensatadsorbers 19. Der Ladeluftkühler 22 dient zum Kühlen der verdichteten Frischluft, die sich beim Verdichten im Verdichter 10 aufheizt.

Die Abgasrückführanlage 6 ist über eine Einleitstelle 23 an den Frischluftstrang 14 angeschlossen. Über die Einleitstelle 23 kann rückgeführtes Abgas in die Frischluft eingeleitet werden. Die Einleitstelle 23 ist im Beispiel der Figur 1 stromab des Verdichters 10 und stromauf des Ladeluftkühlers 22 angeordnet. Die Einleitstelle 23 umfasst hier eine Verteilerleiste 24, die mehrere Öffnungen aufweist oder wenigstens eine längliche Öffnung besitzt, durch die rückgeführtes Abgas in den Frischluftstrang 14 eingeleitet werden kann.

Zweckmäßig besitzt die hier gezeigte Frischluftanlage 4 außerdem ein Saugmodul 25, das im Frischluftstrang 14 angeordnet ist bzw. einen Bestandteil des Frischluftstrangs 14 bildet. Das Saugmodul 25 weist einen Einlass 26 auf, der in eine Verteilerkammer 27 einmündet. Ferner weist das Saugmodul 25 mehrere Saugrohre 28 auf, die jeweils von der Verteilerkammer 27 zu je einem Frischluftauslass 16 führen. Zweckmäßig ist der Kondensatadsorber 19 im Saugmodul 25 angeordnet. Ferner ist hier außerdem vorgesehen, dass der Ladeluftkühler 22 im Saugmodul 25 angeordnet ist. Außerdem ist hier die Einleitstelle 23 bzw. deren Verteilerleiste 24 im bzw. am Saugmodul 25 angeordnet.

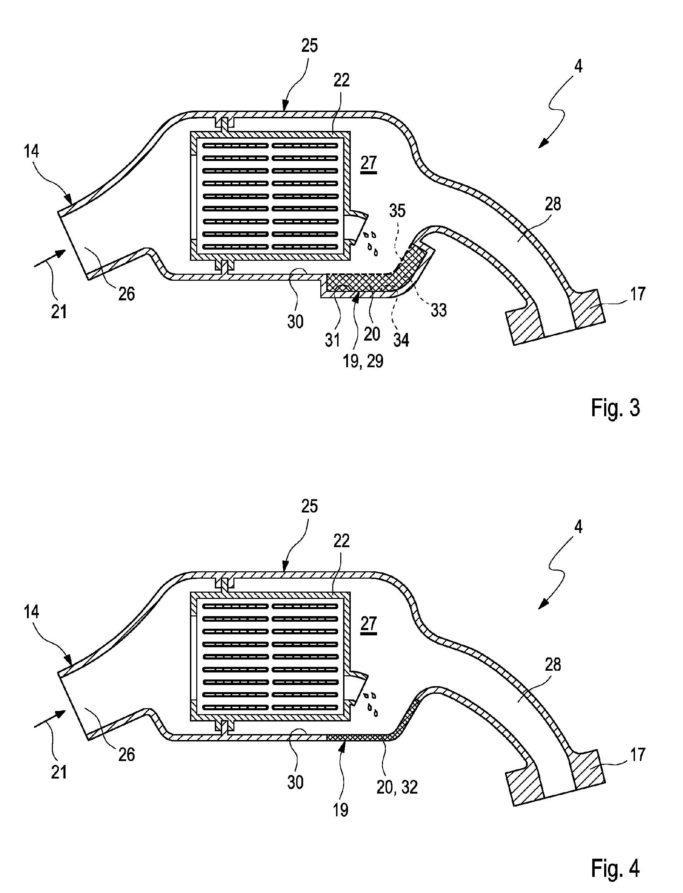

Gemäß den Figuren 2 und 3 kann der Kondensatadsorber 19 als separates Bauteil 29 konzipiert sein, z.B. als elastische und/oder flexible Matte. Das Bauteil 29 ist dabei an einer Wand 30 des Frischluftstrangs 14, hier des Saugmoduls 25, angeordnet. Diese Wand 30 ist dabei dem Frischluftstrom 21 ausgesetzt. Zweckmäßig befindet sich das Bauteil 29 im Einbauzustand der Abgasanlage 4, insbesondere im Einbauzustand des Saugmoduls 25, unten bzw. in einem tiefliegenden Abschnitt, so dass anfallendes Kondensat in Richtung Kondensatadsorber 19 entlang der Wand 30 fließen kann. Sofern der Kondensatadsorber 19 das Bauteil 29 in Form einer Matte aufweist, umfasst diese Matte (Bauteil 29) eine mattenartige Tragstruktur, in die das Adsorbermaterial 20 eingebettet ist.

In einem besonders einfach realisierbaren Fall kann gemäß Figur 2 vorgesehen sein, das Bauteil 29 auf die dem Frischluftstrom 21 zugewandte Innenseite der Wand 30 aufzulegen. Somit baut das Bauteil 29 auf die Wand 30 auf und definiert eine vergleichsweise einfach anströmbare Störkontur.

Bei der in Figur 3 gezeigten Ausführungsform ist in die Wand 30 eine Aussparung 31 eingearbeitet, in die das Bauteil 29 eingesetzt ist. Die Tiefe der Aussparung 31 entspricht hier der Wandstärke des Bauteils 29, wodurch das Bauteil 29 bündig zur übrigen Wand 30 bzw. bündig zur Innenseite der Wand 30 in die Aussparung 31 eingesetzt ist.

Figur 4 zeigt eine andere Ausführungsform, bei welcher der Kondensatadsorber 19 in die Wand 30 integriert ist, und zwar derart, dass das Adsorbermaterial 20 in einen Werkstoff 32, aus dem die Wand 30 hergestellt ist, eingebettet ist. Zweckmäßig wird die Wand 30 aus einem Kunststoff hergestellt. Bei der Herstellung kann dabei das Adsorbermaterial 20 in den Kunststoff (Werkstoff 32) eingebettet werden.

Bei einer anderen Ausführungsform, die in Figur 3 mit unterbrochenen Linien angedeutet ist, kann das Adsorbermaterial 20 durch ein Granulat 33 gebildet sein, wobei in der Wand 30 zur Unterbringung des Granulats 33 ein Granulatbett 34 ausgespart sein kann. Das im Granulatbett 34 lose angeordnete Granulat 33 kann dabei an einer dem Verteilerraum 27 zugewandten Seite mit einer Abdeckung 35 abgedeckt sein, die beispielsweise aus einem wasser- und gasdurchlässigen Vlies oder Gitter bestehen kann.

Bei allen Ausführungsformen kann vorgesehen sein, dass das Adsorbermaterial 20 eine poröse Struktur besitzt, wodurch es eine extrem hohe Oberfläche aufweist. Zusätzlich oder alternativ kann vorgesehen sein, dass bei den Ausführungsformen das Adsorbermaterial 20 eine Kapillarstruktur aufweist. Als Adsorbermaterial 20 kommt vorzugsweise Magnesiumkarbonat zum Einsatz.

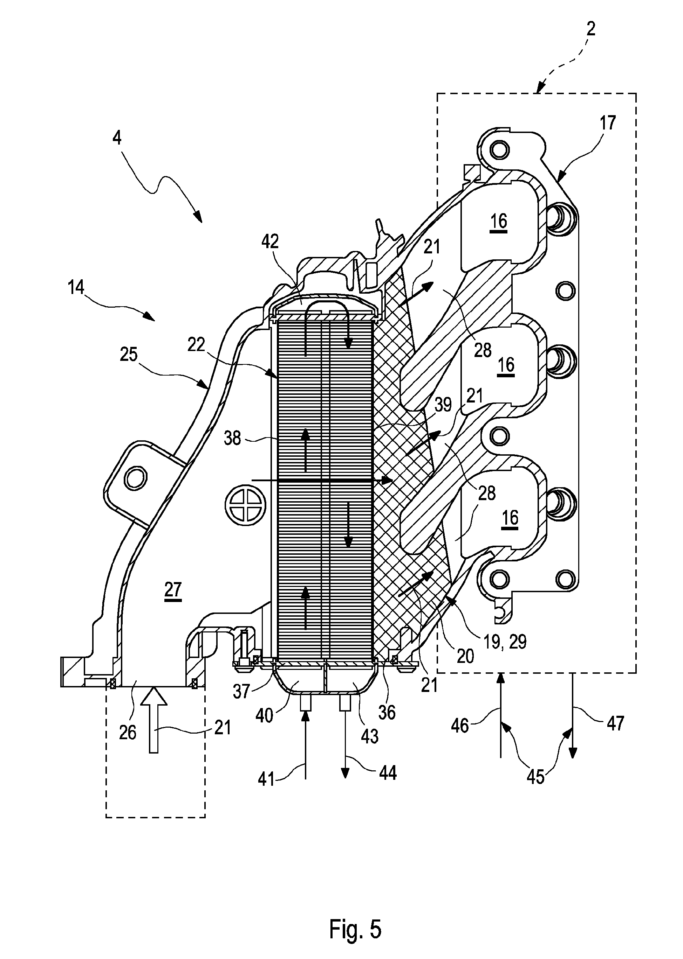

Figur 5 lässt sich entnehmen, dass der Kondensatadsorber 19 abweichend zu den Darstellungen der Figuren 2 bis 4 auch bis in die Saugrohre 28 hineinragen kann. Alternativ ist ebenso denkbar, mehrere Kondensatadsorber 19 vorzusehen, die jeweils in einem der Saugrohre 28 angeordnet sind, wobei entweder ein zusätzlicher im Bereich der Verteilerkammer 27 angeordneter Kondensatadsorber 19 vorgesehen sein kann, der sich wie in Fig. 5 über die gesamte Breite des Saugmoduls 25 erstreckt. Figur 5 lässt sich ferner entnehmen, dass der Kondensatadsorber 19 unterschiedlich tief in die unterschiedlichen Saugrohre 28 hineinragen kann. Beispielsweise kann bei dem in Figur 5 unten gezeigten Saugrohr 28 eine größere Kondensatmenge anfallen als bei dem in Figur 5 oben gezeigten Saugrohr 28. Daran angepasst ragt der Kondensatadsorber 19 in das untere Saugrohr 28 weiter hinein als in das obere Saugrohr 28.

Gemäß Figur 5 kann bei der hier gezeigten Ausführungsform vorgesehen sein, das Saugmodul 25 mit einer seitlichen Einschuböffnung 36 auszustatten, durch die der Ladeluftkühler 22 seitlich in das Saugmodul 25 einführbar ist. Ein fest am Ladeluftkühler 22 angebrachter Deckel 37 verschließt bei eingebautem Ladeluftkühler 22 diese Einschuböffnung 36, wobei gleichzeitig der Ladeluftkühler 22 am Saugmodul 25 befestigt wird. Ferner ist hier der Ladeluftkühler 22 von einem Kühlmittel zweifach durchströmt, nämlich einerseits an einer der Frischluftströmung 21 ausgesetzten Eintrittsseite 38 und andererseits an einer der Frischluftströmung 21 ausgesetzten Austrittseite 39. Ein Verteilerkanal 40 des Ladeluftkühlers 22 verteilt das über einen Zulauf 41 zugeführte Kühlmittel auf mehrere Kühlrohre, die das Kühlmittel entlang der Einlassseite 38 bis zu einer Umlenkkammer 42 des Ladeluftkühlers 22 führen. In der Umlenkkammer 42 wird das Kühlmittel auf weitere Rohre umgelenkt, die das Kühlmittel dann entlang der Austrittsseite 39 zu einer Sammelkammer 43 des Ladeluftkühlers 22 führen, von der das Kühlmittel über einen Rücklauf 44 abgeführt wird. In Figur 5 ist ferner eine Motorkühlung 45 mit Vorlauf 46 und Rücklauf 47 angedeutet.

## Patentansprüche

1. Frischluftanlage einer Brennkraftmaschine (1) zum Zuführen von Frischluft zu Brennräumen (3) der Brennkraftmaschine (1),
- mit einem Frischluftstrang (14) zum Führen von Frischluft,
- mit wenigstens einem Frischlufteinlass (15), durch den Frischluft in den Frischluftstrang (14) eintreten kann,
- mit wenigstens einem Frischluftauslass (16), durch den Frischluft aus dem Frischluftstrang (14) austreten kann,
**gekennzeichnet durch** wenigstens einen Kondensatadsorber (19) zum Adsorbieren von kondensiertem Wasser, der im Frischluftstrang (14) zwischen dem Frischlufteinlass (15) und dem Frischluftauslass (16) angeordnet und der darin geführten Frischluft ausgesetzt ist.

2. Frischluftanlage, **gekennzeichnet durch**
- eine im Frischluftstrang (14) angeordnete Ladeeinrichtung (10) zum Verdichten der Frischluft,
- einen im Frischluftstrang (14) stromab der Ladeeinrichtung (10) und stromauf des Kondensatadsorbers (19) angeordneten Ladeluftkühler (22) zum Kühlen der verdichteten Frischluft.

3. Frischluftanlage nach Anspruch 2, **gekennzeichnet durch** eine stromauf des Ladeluftkühlers (22) am Frischluftstrang (14) angeordnete Einleitstelle (23) zum Einleiten von rückgeführtem Abgas in die Frischluft.

4. Frischluftanlage nach einem der Ansprüche 1 bis 3, **gekennzeichnet durch** ein im Frischluftstrang (14) angeordnetes Saugmodul (25), von dem mehrere Saugrohre (28) abgehen, die jeweils zu einem Frischluftauslass (16) führen, wobei der Kondensatadsorber (19) im Saugmodul (25) angeordnet ist.

5. Frischluftanlage nach den Ansprüchen 2 und 4,
**dadurch gekennzeichnet,**
**dass** der Ladeluftkühler (22) im Saugmodul (25) angeordnet ist.

6. Frischluftanlage nach einem der Ansprüche 1 bis 5,
**dadurch gekennzeichnet,**
**dass** der Kondensatadsorber (19) als separates Bauteil (29) konzipiert ist, das an einer der Frischluft ausgesetzten Wand (30) des Frischluftstrangs (14) angeordnet ist.

7. Frischluftanlage nach einem der Ansprüche 1 bis 6,
**dadurch gekennzeichnet,**
**dass** der Kondensatadsorber (19) eine Matte (29) aufweist, in die ein Kondensat adsorbierendes Adsorbermaterial (20) eingebettet ist.

8. Frischluftanlage nach Anspruch 6 oder 7,
**dadurch gekennzeichnet,**
**dass** die Wand (30) eine Aussparung (31) zum Einsetzen des Bauteils (29), insbesondere der Matte (29), aufweist.

9. Frischluftanlage nach einem der Ansprüche 1 bis 5,
**dadurch gekennzeichnet,**
**dass** der Kondensatadsorber (19) in eine der Frischluft ausgesetzte Wand (30) des Frischluftstrangs (14) integriert ist, in dem ein Kondensat adsorbierendes Adsorbermaterial (20) in einen Werkstoff (32) der Wand (30) eingebettet ist.

10. Frischluftanlage nach einem der Ansprüche 1 bis 5,
**dadurch gekennzeichnet,**
**dass** der Kondensatadsorber (19) ein Granulat (33) aus einem Kondensat adsorbierenden Adsorbermaterial (20) aufweist, das in einem Granulatbett (34) angeordnet ist, das in einer der Frischluft ausgesetzten Wand (30) des Frischluftstrangs (14) ausgespart ist.

11. Frischluftanlage nach einem der Ansprüche 1 bis 10,
**dadurch gekennzeichnet,**
**dass** der Kondensatzadsorber (19) als Adsorbermaterial (20) eine poröse Struktur und/oder eine Kapillarstruktur aufweist.

12. Frischluftanlage nach einem der Ansprüche 1 bis 11,
**dadurch gekennzeichnet,**
**dass** der Kondensatadsorber (19) als Adsorbermaterial (20) Magnesiumkarbonat aufweist.

13. Brennkraftmaschine für ein Kraftfahrzeug,
- mit einer Frischluftanlage (4) nach einem der vorhergehenden Ansprüche,
- mit einer Abgasanlage (5) zum Abführen von Abgas von den Brennräumen (3) der Brennkraftmaschine (1),
- mit einer Abgasrückführanlage (6) zum Rückführen von Abgas von der Abgasanlage (5) zur Frischluftanlage (4).
